# EUROPÄISCHE PATENTANMELDUNG

(11) **EP 4 350 922 A1**
(43) Veröffentlichungstag der Anmeldung: **10.04.2024**
(21) Anmeldenummer: 23196837.1
(22) Anmeldetag: 12.09.2023
(51) Int. Cl.: H02J 1/00, H02J 1/10, H02J 3/36, H02H 7/26, H02H 9/02

(54) **ELEKTRISCHES NETZWERK ZUR HOCHSPANNUNGSGLEICHSTROMÜBERTRAGUNG**

(30) Priorität: 22.09.2022 DE 102022124365
(71) Anmelder: TenneT TSO GmbH, 95448 Bayreuth (DE)
(72) Erfinder: Rathke, Christian, 31157 Sarstedt (DE); Buchhagen, Christoph, 31275 Lehrte (DE)
(74) Vertreter: Scheffler, Jörg

(57) **Zusammenfassung**

Die Erfindung betrifft ein elektrisches Netzwerk (1), eingerichtet zur Hochspannungsgleichstromübertragung von elektrischer Energie, wobei das elektrische Netzwerk (1) wenigstens einen Wechselstromnetzabschnitt (2) und einen mit jedem Wechselstromnetzabschnitt (2) elektrisch verbundenen Gleichstromnetzabschnitt (3) umfasst. Hierbei weist der Gleichstromnetzabschnitt (3) zudem wenigstens zwei elektrische Zweige (4) auf, wobei eine Schnittstelle zwischen jedem Wechselstromnetzabschnitt (2) und dem Gleichstromnetzabschnitt (3) wenigstens einen zur Hochspannungsgleichstromübertragung eingerichteten Stromrichter (5) umfasst. Darüber hinaus ist in dem Gleichstromnetzabschnitt (3) wenigstens ein Hochspannungsschalter (6) und wenigstens ein Strombegrenzer (7) und wenigstens einer der Stromrichter (5) als ein Vollbrückenstromrichter (8) ausgeführt.

## Beschreibung

Die Erfindung betrifft ein elektrisches Netzwerk, welches zur Hochspannungsgleichstromübertragung von elektrischer Energie eingerichtet ist. Hierbei umfasst das elektrische Netzwerk wenigstens einen Wechselstromnetzabschnitt und einen mit jedem Wechselstromnetzabschnitt elektrisch verbundenen Gleichstromnetzabschnitt, wobei der Gleichstromnetzabschnitt wenigstens zwei elektrische Zweige aufweist. Darüber hinaus umfasst eine Schnittstelle zwischen jedem Wechselstromnetzabschnitt und dem Gleichstromnetzabschnitt wenigstens einen zur Hochspannungsgleichstromübertragung eingerichteten Stromrichter, wobei in dem Gleichstromnetzabschnitt wenigstens ein Hochspannungsschalter und wenigstens ein Strombegrenzer ausgeführt ist.

Wie allgemein bekannt, ist es teils notwendig, elektrische Energie auch über weite bis sehr weite Entfernungen von mehreren Hundert Kilometern, bevorzugt mittels Freileitungen über Land zu übertragen. Zur Gewährleistung einer wirtschaftlichen Übertragung erfolgt dabei der Ausbau der die elektrische Energie übertragenden elektrischen Netze oder Teilnetze oftmals unter Ausführung einer Hochspannungs-Gleichstrom-Übertragung (HGÜ), im Rahmen derer gewöhnlicherweise zwei Wechselstromteilnetze über ein Gleichstromteilnetz verbunden werden. Neben einer Ausführung bei weiten bis sehr weiten Entfernungen erfolgt eine Anwendung einer HGÜ jedoch auch bereits bei kürzeren Entfernungen von mehreren Zehn Kilometern, wenn die übertragenden elektrischen Leiter, wie beispielsweise Erd- oder Seekabel, einen hohen kapazitiven Leitungsbelag aufweisen. So werden auch Windparks, hier insbesondere Offshore-Windparks regelmäßig unter Ausgestaltung einer HGÜ mit an Land ausgeführten elektrischen Netzen angebunden.

Nachteilig zeigt sich eine HGÜ insbesondere jedoch dann, wenn im Gleichstromteilnetz, beispielsweise an elektrischen Leitern, Fehler und damit verbundene Fehlergleichströme auftreten. Dabei bilden die anliegenden, sehr hohen Gleichspannungen mit den vorliegenden, ebenfalls sehr hohen Stromstärken auftretender Fehlerströme und dem im Gegensatz zu Wechselströmen fehlenden Nulldurchgang eine Herausforderung bei der insbesondere selektiven Trennung des Zweigs des Gleichstromteilnetzes, in welchem der Fehler aufgetreten ist.

In diesem Zusammenhang sind dem Stand der Technik jedoch bereits Lösungsansätze zu entnehmen.

So ist aus der CN 1 10 829 396 A ein elektrisches Netz aus zwei über ein Gleichstromteilnetz verbundenen Wechselstromteilnetzen unter Ausführung einer hybriden Hochspannungsgleichstromübertragung bekannt, wobei sich die hybride Ausgestaltung durch Verwendung eines netzgeführten Stromrichters, d. h. hierbei eines Line-Commutated-Converters als quellseitiger Gleichrichter, und eines selbstgeführten Stromrichters, d. h. hierbei eines Voltage-Source-Converters als lastseitiger Wechselrichter, ergibt. Zum Minimieren respektive Unterbinden eines im Gleichstromteilnetz auftretenden Fehlerstroms ist jeweils ein- sowie ausgangsseitig einer Übertragungsleitung des Gleichstromteilnetzes ein supraleitender Fehlerstrombegrenzer sowie ein wiederum hybrider Leistungsschalter ausgeführt, wobei in dem hybriden Leistungsschalter mechanische Schalter mit Halbleiterschaltern kombiniert sind.

Darüber hinaus offenbart die CN 1 13 629 680 A ein Verfahren zur Begrenzung eines Kurzschlussfehlerstroms sowie eine Ausgestaltung eines elektrischen Netzes mit einer Hochspannungs-Gleichstrom-Übertragung unter Verwendung eines Modular-Multi-Level-Converters (MMC). Hierbei wird nach dem Auftreten eines Kurzschlussfehlers im elektrischen Netz die Anstiegsgeschwindigkeit und die Höhe des Fehlerstroms vor dem Öffnen der auf der Gleichspannungsseite des MMCs ausgeführten Gleichstrom-Leistungsschalter begrenzt, um die Sicherheit des elektrischen Netzes zu gewährleisten. Hierfür wird eine aktive Strombegrenzungssteuerung mit einem auf der Gleichspannungsseite des MMCs ausgeführten und mit dem Plus- sowie Minuspol des MMCs verbundenen Fehlerstrombegrenzer auf Basis einer kapazitiven Kommutierung kombiniert, wobei die Begrenzung der Anstiegsgeschwindigkeit über die Strombegrenzungssteuerung und die Begrenzung des Fehlerstroms entsprechend über den Fehlerstrombegrenzer erfolgt.

Gerade auch bei Gleichstromteilnetzen mit mehreren Einspeisepunkten nimmt die selektive Trennung lediglich eines Zweigs oder der Zweige des Gleichstromteilnetzes, in welchem ein Fehler auftritt, einen besonders hohen Stellenwert ein, da das Gleichstromteilnetz somit insbesondere ohne vollständige Trennung weitgehend weiterbetrieben werden kann.

In diesem Zusammenhang beschreibt die CN 1 08 092 252 A ein elektrisches Netz, aufweisend ein Gleichstromteilnetz mit einer Hochspannungsgleichstromübertragung, wobei das Gleichstromteilnetz über mehrere Einspeiseterminals verfügt. Jedes Einspeiseterminal weist dabei einen mit einem Wechselspannungsnetz gekoppelten, selbstgeführten Stromrichter, hier einen Modular-Multi-Level-Converter, auf. Zum Minimieren respektive dem Unterbinden von im Gleichstromteilnetz auftretenden Fehlerströmen ist in einem jeweiligen Zweig zwischen jedem gleichspannungsseitigen Anschluss eines Modular-Multi-Level-Converters und einem zudem in Reihe in dem Zweig installierten Gleichstrom-Leistungsschalter ein supraleitender Fehlerstrombegrenzer ausgeführt.

Die aufgezeigten Lösungen gehen dabei jedoch jeweils von der Verwendung von Gleichstrom-Leistungsschaltern zur Trennung von fehlerbehafteten Zweigen des Gleichstromteilnetzes aus. Solche Gleichstrom-Leistungsschalter basieren derzeit auf leistungselektronischen Betriebsmitteln, sind überaus kostenintensiv und haben einen großen Platzbedarf. Dies verursacht insbesondere bei Offshore-Anordnung der Gleichstrom-Leistungsschalter sehr hohe Kosten für die dafür notwendige Plattform.

Darüber hinaus zeigt die EP 3 197 042 A1 ein Windenergieerzeugungssystem. Hierbei geht die EP 3 197 042 A1 von der Problematik aus, dass in einem konventionellen Windenergieerzeugungssystem Windkraftgeneratoren mit Wechselstrom/Gleichstrom-Wandlern an mehrere Zuführleitungen angeschlossen sind, wobei in jeder Zuführleitung ein Gleichstromschalter installiert ist. Wenn in einer Zuführleitung ein Gleichstromfehler auftritt, fließt der gesamte erzeugte Strom aus den Windkraftgeneratoren in diese Leitung, was zu erhöhten Kosten und einer erhöhten Größe der den Stromfluss unterbrechenden Gleichstromschalter führt. In einer ersten Ausführungsform des beschriebenen Windenergieerzeugungssystem sind Dioden in die Zuführleitungen eingefügt, um den Stromfluss bei einem Fehler zu verhindern. Dies verringert die Belastung der Gleichstromschalter erheblich und ermöglicht kompaktere und kostengünstigere Schalter. Dies führt auch dazu, dass die Stromrichtung im Windenergieerzeugungssystem in einem einseitigen Stromfluss von den Windkraftgeneratoren zu einem Gleichstrombus verläuft und keine bidirektionale Wechselwirkung erforderlich ist.

Die WO 2016 / 026 524 A1 betrifft zudem ein Verfahren zur Unterbrechung eines elektrischen Stroms in einer Gleichspannungsleitung, die mit einem Gleichspannungsanschluss eines Umrichters verbunden ist. Bei einem Fehlerfall in der Gleichspannungsleitung wird der gleichspannungsseitige Umrichterstrom auf einen Wert geregelt, der kleiner ist als der Stromsollwert im Normalbetrieb und/oder die gleichspannungsseitige Umrichterspannung wird auf einen Wert geregelt, der kleiner ist als der Spannungssollwert im Normalbetrieb. Hierbei werden der vorgegebene Stromsollwert und/oder der Spannungssollwert zeitweise auf null gesetzt. Sowohl die Spannung als auch der Strom sinken nach kurzer Zeit auf sehr kleine Werte, was die Unterbrechung der fehlerbehafteten Leitung mittels einer Schaltvorrichtung ermöglicht.

Aus der US 2019 / 0 074 685 A1 geht ein elektrisches Netzwerk zum Anschluss eines Offshore-Windparks über eine Hochspannungsgleichstromübertragung hervor, wobei das elektrische Netzwerk neben einem Gleichstromnetzabschnitt auch mehrere Wechselstromnetzabschnitte aufweist. An der Schnittstelle zwischen jedem Wechselstromnetzabschnitt und dem Gleichstromnetzabschnitt ist mindestens ein Stromrichter installiert, der für die Hochspannungsgleichstromübertragung geeignet ist, wobei einer der Stromrichter offshore angeordnet ist. Ferner ist an jeder der Schnittstellen gleichstromseitig eine Ausrüstungsgruppe mit mindestens drei Terminals ausgeführt, die mit einem Knotenpunkt verbunden sind. Jede Verbindung zwischen einem Terminal und dem Knotenpunkt umfasst einen supraleitenden Strombegrenzer und einen in Reihe geschalteten, gesteuerten Schalter. Die Ausrüstungsgruppe beinhaltet darüber hinaus auch einen Kondensator, über welchen bei einem Spannungsabfall an dem Knotenpunkt ein elektrischer Strom eingespeist wird, um einen der Strombegrenzer an dem Terminal, an dem ein Kurzschluss auftritt, auszulösen. Dies gewährleistet die Selektivität bei der Öffnung der gesteuerten Schalter.

Durch die US 2017 / 0 074 919 A1 ist weiterhin ein Verfahren sowie eine Vorrichtung zur Fehlererkennung in einem Gleichstrom-Übertragungsnetzwerk oder -netz bekannt, die zur Bestimmung des Fehlerorts im Netzwerk bestimmt sind. Das Verfahren beinhaltet, im Falle eines Fehlers zumindest ein strombegrenzendes Element des Netzwerks zu steuern, um den fließenden Fehlerstrom auf ein Niveau unterhalb eines ersten Strompegels zu begrenzen, der sich innerhalb des erwarteten Strombetriebsbereichs des Netzwerks im Normalbetrieb befindet, d. h., auf ein sicheres Niveau. Der Fehlerstrom wird dann gesteuert, um einen nicht nullwertigen Fehlerstromfluss aufrechtzuerhalten, und die Eigenschaften des Fehlerstromflusses an verschiedenen Stellen des Netzwerks werden durch Fehlerstromerkennungsmodule ermittelt. Der Fehlerort wird dann auf der Grundlage der ermittelten Eigenschaften bestimmt.

Aus der CN 1 15 051 335 A geht zudem ein elektrisches Netzwerk hervor, welches für die Übertragung von Hochspannungsgleichstrom (HGÜ) ausgelegt ist. Dieses elektrische Netzwerk besteht aus mindestens einem Wechselstromnetzabschnitt und einem Gleichstromnetzabschnitt, die elektrisch miteinander verbunden sind. Der Gleichstromnetzabschnitt verfügt dabei über mindestens zwei elektrische Zweige. An der Schnittstelle zwischen jedem Wechselstromnetzabschnitt und dem Gleichstromnetzabschnitt ist mindestens ein Stromrichter installiert, der für die Hochspannungsgleichstromübertragung geeignet ist. Zusätzlich sind im Gleichstromnetzabschnitt mindestens ein Hochspannungsschalter und mindestens ein Strombegrenzer vorhanden und mindestens einer der Stromrichter ist als Vollbrückenstromrichter ausgeführt.

Vor diesem Hintergrund liegt der Erfindung die Aufgabe zugrunde, ein elektrisches Netzwerk der eingangs genannten Art derart auszuführen, dass auf die Verwendung von GleichstromLeistungsschaltern verzichtet werden kann.

Diese Aufgabe wird erfindungsgemäß mit einem elektrischen Netzwerk gemäß den Merkmalen des Anspruchs 1 gelöst. Die weitere Ausgestaltung der Erfindung ist den Unteransprüchen zu entnehmen.

Erfindungsgemäß ist also ein zur Hochspannungsgleichstromübertragung - und/oder Verteilung - von elektrischer Energie eingerichtetes elektrisches Netzwerk vorgesehen, wobei das elektrische Netzwerk wenigstens einen Wechselstromnetzabschnitt und - wenigstens - einen mit jedem Wechselstromnetzabschnitt elektrisch verbundenen, insbesondere vermaschten Gleichstromnetzabschnitt umfasst. Hierbei weist der Gleichstromnetzabschnitt wenigstens zwei elektrische Zweige auf. Grundsätzlich ist hierbei denkbar, dass lediglich ein Wechselstromnetzabschnitt ausgeführt ist, dieser Wechselstromnetzabschnitt beispielsweise über wenigstens zwei Schnittstellen mit dem Gleichstromnetzabschnitt elektrisch verbunden ist und eine Verteilung der elektrischen Energie direkt über den Gleichstromnetzabschnitt oder über wenigstens einen weiteren Gleichstromnetzabschnitt, z. B. mit einer unterschiedlichen Spannungshöhe, erfolgt. Bevorzugt ist das elektrische Netzwerk jedoch mit wenigstens zwei, bevorzugt gar mehr als zwei Wechselstromnetzabschnitten ausgeführt, wobei die Wechselstromnetzabschnitte folglich über den Gleichstromnetzabschnitt miteinander verbunden sind. Ein jeder Wechselstromnetzabschnitt wäre dabei bevorzugt zur Leitung und/oder Verteilung eines Dreiphasenwechselstroms eingerichtet.

Erfindungsgemäß umfasst hierbei eine - jede - Schnittstelle zwischen jedem Wechselstromnetzabschnitt und dem Gleichstromnetzabschnitt wenigstens einen zur Hochspannungsgleichstromübertragung eingerichteten Stromrichter, wobei in dem Gleichstromnetzabschnitt zudem wenigstens ein Hochspannungsschalter und wenigstens ein Strombegrenzer ausgeführt ist. Der Hochspannungsschalter wäre in bevorzugter Ausführung ein Leistungsschalter, wobei jedoch auch eine Ausführung als ein Leistungstrennschalter, Lastschalter oder Lasttrennschalter denkbar wäre. Der zumindest eine, insbesondere jedoch jeder, Strombegrenzer sollte darüber hinaus derart dimensioniert sein, dass bei einer Begrenzung eines Stroms, insbesondere eines Kurzschlussstroms oder Fehlerstroms, die Stromstärke des Stroms im Wesentlichen maximal der Stromstärke eines Nennstroms entspricht, welche auch im Regelbetrieb des elektrischen Netzwerks vorliegt.

Ferner ist erfindungsgemäß zudem vorgesehen, dass wenigstens einer der Stromrichter ein Vollbrückenstromrichter ist. Durch die Verwendung wenigstens eines Vollbrückenstromrichters kann vorteilhaft auf die Ausführung von Gleichstromleistungsschaltern, also Leistungsschaltern, welche entsprechend zum Schalten von Gleichstrom eingerichtet sind, verzichtet werden.

Zur Übertragung und/oder Verteilung von elektrischer Energie wird das elektrische Netzwerk durch wenigstens eine Stromerzeugeranlage gespeist, welche mit dem elektrischen Netzwerk elektrisch verbunden respektive Teil des elektrischen Netzwerks ist. Insbesondere ist dabei wenigstens ein Wechselspannungsabschnitt mit zumindest einer einen Wechselstrom bereitstellenden Stromerzeugeranlage verbunden respektive ist zumindest eine Stromerzeugeranlage Teil wenigstens eines Wechselstromnetzabschnitts. Darüber hinaus wäre zudem auch denkbar, dass wenigstens eine einen Gleichstrom erzeugende Stromerzeugeranlage mit dem Gleichstromnetzabschnitt verbunden respektive Teil des Gleichstromnetzabschnitts wäre.

Die Stromerzeugeranlagen können dabei grundsätzlich auch solche Stromerzeugeranlagen sein, welche elektrische Energie aus klassischen Energieträgern, d. h. insbesondere chemischen, beispielsweise fossilen oder nuklearen Energieträgern gewinnen. Demnach könnten die Stromerzeugeranlagen als Kohle-, Erdöl-, Erdgas- und/oder Kernkraftwerk ausgeführt sein. In übergeordneter Bedeutung sind die den wenigstens einen Wechselstromabschnitt und/oder den Gleichstromnetzabschnitt speisenden Stromerzeugeranlagen hingegen jedoch solche Stromerzeugeranlagen, welche elektrische Energie aus regenerativen Energie-trägern wie insbesondere Wind, Sonne und/oder Wasserkraft gewinnen. Bevorzugt wäre eine Stromerzeugeranlage somit als Photovoltaikanlage oder besonders bevorzugt als Windkraftanlage ausgebildet.

Darüber hinaus ist in einer besonders vorteilhaften Weiterbildung der Erfindung wenigstens einer der Stromrichter ein Halbbrückenstromrichter. Die Verwendung von Halbbrückenstromrichtern bietet hierbei den Vorteil einer geringeren Baugröße, verbunden mit einem geringeren Gewicht sowie verminderten Kosten eines Halbbrückenstromrichters gegenüber einem Vollbrückenstromrichter.

In diesem Rahmen lässt sich anmerken, dass grundsätzlich die Möglichkeit bestünde, dass die Stromrichter, somit insbesondere die Vollbrückenstromrichter und/oder Halbbrückenstromrichter als netzgeführte Stromrichter respektive Line-Commutated-Converter (LLC) ausgeführt sind. Bevorzugt sind die Stromrichter jedoch als selbstgeführte Stromrichter respektive als Voltage-Source-Converter (VSC) ausgestaltet, wobei die Stromrichter dabei besonders bevorzugt als modulare Multilevel-Umrichter oder auch Modular-Multi-Level-Converter (MMC) genannt ausgebildet sind. Dies entsprechend in Vollbrückenkonfiguration oder Halbbrückenkonfiguration.

Als überaus gewinnbringend stellt es sich zudem dar, wenn in einer Ausführungsform der Erfindung in - wenigstens - einem, insbesondere jedem, Zweig mit einem Halbbrückenstromrichter und/oder in - wenigstens - einem Zweig mit einem Vollbrückenstromrichter zumindest ein Strombegrenzer ausgeführt ist. Diese Ausführungsform weiterbildend ist ferner angedacht, dass wenigstens ein, insbesondere in Reihe zum Strombegrenzer geschalteter, Hochspannungsschalter ausgeführt ist.

Zwar besteht hierbei die Möglichkeit, dass ein Vollbrückenstromrichter innerhalb eines Zweigs in Reihe mit einem Strombegrenzer und/oder einem Hochspannungsschalter ausgeführt ist, bevorzugt ist jedoch die Ausführung eines Halbbrückenschalters in Reihe mit einem Strombegrenzer und/oder einem Hochspannungsschalter innerhalb eines Zweigs. Dabei ist gerade diese Reihenschaltung eines Halbbrückenschalters mit einem Strombegrenzer und/oder einem Hochspannungsschalter unter anderem dazu geeignet, diese anstelle eines Vollbrückenstromrichters in einem Zweig auszuführen, sodass im Fall des Auftretens eines Fehlerstroms mittels des Strombegrenzers die Stromstärke des Fehlerstroms höchstens auf und/oder unter einen Nennstrom begrenzt wird. Mittels des Hochspannungsschalters ließe sich nach einer weiteren Begrenzung des Fehlerstroms auf oder unter eine Grenzstromstärke der über die Fehlerstelle verbleibende Fehlerstrom respektive der fehlerbehaftete Zweig abschalten und/oder trennen.

In einer weiteren vielversprechenden Ausgestaltung des erfindungsgemäßen elektrischen Netzwerks ist zudem vorgesehen, dass in - wenigstens - einem, gegebenenfalls einem, insbesondere weiteren, sich von einem Zweig mit einem Vollbrückengleichrichter und einem Strombegrenzer unterscheidenden, Zweig mit einem Vollbrückenstromrichter kein Strombegrenzer ausgeführt ist. Durch den Verzicht auf die Ausführung eines Strombegrenzers in einem Zweig mit einem Vollbrückenstromrichter ließen sich der Bauraum sowie die Kosten reduzieren und ein auftretender Fehlerstrom höchstens auf und/oder unter eine Grenzstromstärke, hier insbesondere die Schaltgrenze respektive das Schaltvermögen eines im Zweig in Reihe zum Vollbrückenstromrichter geschalteten Hochspannungsschalters respektive gar auf null begrenzen.

Prinzipiell kann hierbei im Allgemeinen auch höchstens ein Vollbrückenstromrichter im elektrischen Netzwerk als eine Schnittstelle zwischen einem Wechselstromnetzabschnitt und dem Gleichstromnetzabschnitt ausgeführt sein.

Ferner lässt es sich als gewinnbringend ansehen, wenn in einer Ausbildung der Erfindung in dem Gleichstromnetzabschnitt wenigstens ein Gleichstrombus ausgeführt ist, wobei wenigstens ein einen Stromrichter aufweisender Zweig mit dem Gleichstrombus und/oder einem Busabschnitt des Gleichstrombusses elektrisch verbunden ist. Bevorzugt ist dabei jedoch jeder im Gleichstromnetzabschnitt ausgeführte Zweig mit dem Gleichstrombus verbunden. Der Gleichstrombus kann hierbei z. B. als wenigstens eine Sammelschiene, insbesondere als wenigstens eine Gleichstromsammelschiene und/oder wenigstens ein Kabelstrang, insbesondere wenigstens ein Gleichstromkabelstrang ausgebildet sein.

Die vorstehende Ausbildung vorteilhaft weiterbildend, jedoch auch in alleinstehender Ausgestaltung der Erfindung, ist es als gestalterisch günstig anzusehen, wenn wenigstens zwei - insbesondere in Reihe aneinander angrenzende - Busabschnitte des Gleichstrombusses über wenigstens einen in Reihe mit wenigstens einem Hochspannungsschalter geschalteten Strombegrenzer elektrisch verbunden sind. So könnte beispielsweise auf etwaige in wenigstens einem Zweig mit einem Stromrichter des Gleichstromnetzabschnitts ausgeführte Strombegrenzer und/oder Hochspannungsschalter verzichtet und somit die Anzahl der Strombegrenzer und/oder Hochspannungsschalter im elektrischen Netzwerk auf ein Minimum reduziert werden, was wiederum den notwenigen Bauraum sowie anfallende Kosten reduziert. In diesem Fall könnte in der Topologie des elektrischen Netzwerks, insbesondere des Gleichstromnetzabschnitts vorgesehen sein, dass nur Zweige mit einem Vollbrückenstromrichter und nur Zweige mit einem Halbbrückenstromrichter, ohne weitere Strombegrenzer und/oder Hochspannungsschalter, mit je einem Busabschnitt elektrisch verbunden sind. Ein Bus-abschnitt selbst könnte wiederum als wenigstens eine Sammelschiene, insbesondere als wenigstens eine Gleichstromsammelschiene und/oder wenigstens ein Kabelstrang, insbesondere wenigstens ein Gleichstromkabelstrang, ausgebildet sein.

Eine Gestaltungsform der Erfindung stellt sich überdies auch dann als vorteilhaft dar, wenn - wenigstens - ein, insbesondere jeder, im Gleichstromnetzabschnitt ausgeführter Hochspannungsschalter, insbesondere ein konventionell ausgeführter Hochspannungsschalter und somit grundsätzlich respektive primär, ein zum Schalten von Wechselstrom, insbesondere Dreiphasenwechselstrom, eingerichteter - und dennoch zugleich zum Schalten von Gleichstrom nutzbarer - Hochspannungsschalter ist. Diese konventionell, also zum Schalten von Wechselstrom eingerichteten Hochspannungsschalter, insbesondere Leistungsschalter basieren im Gegensatz zu den zum Schalten von Gleichstrom eingerichteten Hochspannungsschaltern im Wesentlichen auf mechanischen Schalterkomponenten, wie z. B. gekapselte und in einem Isoliermedium angeordnete sowie gegenüber einander beweglich ausgeführte Kontaktelemente. Darüber hinaus weisen die Hochspanungsschalter bevorzugt eine Lichtbogenlöschung auf, insbesondere unter Verwendung eines Löschmittels. Der oder die Hochspannungsschalter können somit beispielsweise als Schwefelhexafluorid(SF₆)-Leistungsschalter ausgeführt sein.

Hochspannungsschalter, insbesondere Leistungsschalter, welche hingegen zum Schalten von Gleichstrom eingerichtet sind, basieren im Wesentlichen auf Leistungshalbleiterbauelementen, sind mit hohen Kosten verbunden und weisen einen sehr hohen Bauraumbedarf auf, was insbesondere bei einer Anordnung auf einer Offshore-Plattform nachteilig ist.

In gestalterisch günstiger Weiterbildung des erfindungsgemäßen elektrischen Netzwerks ist wenigstens ein Halbbrückenstromrichter ferner offshore, insbesondere als Teil einer Offshore-Plattform, bevorzugt einer zur Hochspannungsgleichstromübertragung eingerichteten Umspannplattform, ausgeführt. Diese Weiterbildung fortführend ist zudem angedacht, dass auch wenigstens ein, insbesondere im jeweiligen Zweig mit dem betreffenden Halbbrückenstromrichter angeordneter, Strombegrenzer offshore, d. h. im Küstenvorfeld eines Meers und insbesondere wiederum als Teil einer Offshore-Plattform, bevorzugt einer zur Hochspannungsgleichstromübertragung eingerichteten Umspannplattform, ausgeführt ist. Die Weiterbildung darüber hinaus weiter ausgestaltend ist ferner vorgesehen, dass wenigstens ein - insbesondere jedoch ein jeder - Vollbrückenstromrichter onshore, d. h. an Land, insbesondere als Teil einer zur Hochspannungsgleichstromübertragung eingerichteten Umspannstation, ausgeführt ist.

Somit kann eine kombinierte Ausgestaltung der Erfindung vorsehen, je wenigstens einen Halbbrückenumrichter, wenigstens einen Strombegrenzer und wenigstens einen Hochspannungsschalter auf einer Offshore-Plattform, also einer im Küstenvorfeld eines Meers errichteten Plattform, insbesondere einer Umspannplattform auszuführen. Dies bietet den Vorteil, dass der offshore vorhandene, insbesondere knapp bemessene Bauraum optimal genutzt wird, indem lediglich die elektrischen Baugruppen mit im Vergleich zu Vollbrückenstromrichtern geringerem Bauraumbedarf auf der Offshore-Plattform angeordnet werden. Die im Vergleich zu diesen Baugruppen deutlich mehr Bauraumbedarf aufweisenden Vollbrückenstromrichter würden hingegen onshore, also an Land angeordnet, wo der gesteigerte Bauraumbedarf eine untergeordnete Rolle spielt.

Vor diesem Hintergrund kann zudem angemerkt werden, dass die bereits zuvor angeführte wenigstens eine Stromerzeugeranlage, welche mit dem elektrischen Netzwerk, insbesondere mit wenigstens einem Wechselstromnetzabschnitt, elektrisch verbunden respektive Teil des elektrischen Netzwerks, insbesondere wenigstens eines Wechselstromnetzabschnitts, ist und dieses respektive diesen speist bevorzugt wenigstens eine ebenfalls offshore, also wiederum im Küstenvorfeld eines Meers angeordnete Stromerzeugeranlage ist. Die offshore angeordnete Stromerzeuganlage oder angeordneten Stromerzeugeranlagen ist respektive sind dabei insbesondere als eine Offshore-Windkraftanlage oder als mehrere Offshore-Windkraftanlagen, bevorzugt in Form wenigstens eines Offshore-Windparks, ausgeführt.

In zudem mit Vorteil behafteter Ausgestaltung der Erfindung ist wenigstens ein, insbesondere jeder, Strombegrenzer ein - separat ausgeführter - supraleitender Strombegrenzer respektive ein supraleitender Fehlerstrombegrenzer, wobei diese ferner auch als Super-conducting Fault Current Limiter oder SFCL bekannt sind. Diese weisen hierbei vorteilhaft eine weitgehend hohe Verfügbarkeit auf und genügen der Anforderung an die Strombegrenzung auf einen maximal zulässigen Fehlerstrom respektive Kurzschlussstrom im insbesondere zweistelligen Kiloampere-Bereich.

Im Speziellen liegt eine vorteilhafte Ausführung des supraleitenden Strombegrenzers des erfindungsgemäßen elektrischen Netzwerks ferner darin, dass dieser ein resistiver supraleitender Strombegrenzer und/oder ein induktiver supraleitender Strombegrenzer ist. Neben resistiven und/oder induktiven könnten auch Brücken- oder Mischtypen von supraleitenden Strombegrenzern eingesetzt werden, welche beispielsweise über Dioden und Thyristoren sowie Stromdrosseln verfügen.

Eine zusätzliche oder alternative, jedoch nicht minder vielversprechende, Weiterbildung zur vorstehenden Ausgestaltung des Strombegrenzers als ein - separat ausgeführter - supraleitender Strombegrenzer zeichnet sich überdies dadurch aus, dass ein im elektrischen Netzwerk, insbesondere ein im Gleichstromnetzabschnitt in jedem Zweig mit einem Stromrichter, ausgeführtes Element, elektrisches Bauteil und/oder eine elektrische Baugruppe selbst als supraleitender Strombegrenzer ausgebildet ist. Durch die Ausführung des Strombegrenzers oder der Strombegrenzer als ein solches elektrisches Bauteil und/oder eine elektrische Baugruppe ließe sich vorteilhaft eine spezifische, angepasste Ausgestaltung des Strombegrenzers bereitstellen, welche beispielsweise auf eine geringe Bauraumverfügbarkeit, z. B. auf einer Offshore-Plattform, oder notwendige Leistungsdaten abgestimmt ist. So könnte das Element, das elektrische Bauteil und/oder die elektrische Baugruppe neben der Ausführung in einem Zweig zudem auch als Teil des Gleichstrombusses oder eines Wechselstromnetzabschnitts ausgeführt sein. Im Speziellen könnten etwa eine oder mehrere im elektrischen Netzwerk vorgesehene Stromschienen, Kabelstränge, Drosseln und/oder Transformatoren als supraleitende Strombegrenzer ausgebildet sein.

Hierbei zeigt sich insbesondere im Zusammenhang mit der vorstehend erläuterten Weiterbildung sowie auch im Allgemeinen eine vielversprechende Gestaltungsform der Erfindung dadurch, dass das als supraleitender Strombegrenzer ausgeführte Element, elektrische Bauteil und/oder die als supraleitender Strombegrenzer ausgeführte elektrische Baugruppe Bestandteil - wenigstens - eines, insbesondere jedes, Stromrichters ist. Derart ließe sich die Integrationsdichte und somit der Bauraumbedarf minimieren. Wenigstens eine Drossel und/oder wenigstens ein Halbleiter oder eine Halbeleiterbaugruppe eines Stromrichters könnten dabei als supraleitender Strombegrenzer ausgeführt sein.

Im Gegensatz zu der Ausführung des Strombegrenzers als supraleitendem Strombegrenzer kann eine weitere Ausgestaltungsform der Erfindung zudem vorsehen, dass der Strombegrenzer ein nicht-supraleitender Strombegrenzer ist. Hierbei kann der nicht-supraleitende Strombegrenzer beispielsweise ein Halbleiterstrombegrenzer und/oder ein induktiver Strombegrenzer sein. Durch die Verwendung nicht-supraleitender Strombegrenzer ließe sich ein Bereitstellen einer Kühllösung für supraleitende Strombegrenzer kostenminimierend und somit gewinnbringend vermeiden. Ein solcher nicht-supraleitender Strombegrenzer wäre darüber hinaus ebenfalls derart ausgelegt, dass dieser der Anforderung an die Strombegrenzung auf einen maximal zulässigen Fehlerstrom respektive Kurzschlussstrom im insbesondere zweistelligen Kiloampere-Bereich genügt.

Eine weitere, überaus vorteilhafte Ausführungsform des erfindungsgemäßen elektrischen Netzwerks kann ferner dadurch beschrieben werden, dass - wenigstens - ein, bevorzugt jeder, Vollbrückenstromrichter eine Netzfehlererkennungseinrichtung und/oder eine Reglereinrichtung aufweist, mittels welcher ein Strom, insbesondere ein Fehler- oder Kurzschlussstrom, über eine Fehlerstelle im elektrischen Netzwerk, insbesondere im Gleichstromnetzabschnitt, unterhalb eines Schaltvermögens eines, insbesondere des wenigstens einen im Zweig der Fehlerstelle ausgeführten, Hochspannungsschalters, insbesondere auf im Wesentlichen null Ampere, regelbar ist. So ließe sich bei einem Auftreten eines Fehlers und eines damit verbundenen Fehlerstroms der Fehlerstrom mittels des oder den Vollbrückenstromrichtern erkennen und zumindest reduzieren und/oder gegebenenfalls gar auf null Ampere regeln, sodass ein Abschalten mittels des Hochspannungsschalters oder der Hochspannungsschalter ermöglicht wird. Ein jeweiliger Hochspannungsschalter wäre dabei bevorzugt ein bereits zuvor erläuterter konventionell ausgeführter Hochspannungsschalter und somit grundsätzlich respektive primär, ein zum Schalten von Wechselstrom eingerichteter Hochspannungsschalter.

In gewinnbringender Weise ist eine weitere Ausgestaltung der Erfindung dadurch bestimmt, dass im elektrischen Netzwerk zumindest ein Netzschutzgerät ausgeführt ist, über dessen implementierte Netzfehlererkennungseinrichtung eine Fehlerstelle im elektrischen Netzwerk erkennbar ist und ein Zusammenwirken mindestens eines - die Reglereinrichtung aufweisenden - Vollbrückenstromrichters und wenigstens eines Leistungsschalters koordinierbar ist, um einen Strom über die Fehlerstelle abzuschalten. Hierbei wäre das Netzschutzgerät grundsätzlich separat zu einem jeweiligen Vollbrückenstromrichter ausgeführt, wodurch vorteilhaft eine Koordination wenigstens zweier Vollbrückenstromrichter respektive deren Reglereinrichtungen vereinfacht ermöglicht wird.

Überdies lässt sich eine vorteilhafte Weiterbildung der Erfindung auch dadurch erkennen, dass im elektrischen Netzwerk ein Kommunikationsnetz ausgeführt ist, über welches eine Kommunikation und/oder Koordination von - wenigstens zwei - Netzschutzgeräten untereinander, - wenigstens zwei - Stromrichtern und/oder Strombegrenzern untereinander und/oder wenigstens eines Netzschutzgeräts mit wenigstens einem Stromrichter und/oder Strombegrenzer durchführbar ist. Dies insbesondere, um eine Fehlerstelle zu erkennen und/oder einen Strom über die Fehlerstelle abzuschalten. Hierbei ließe sich durch die Ausführung und Verwendung eines Kommunikationsnetzes die Fehlerstelle präziser lokalisieren und der betroffene Abschnitt des elektrischen Netzwerks, insbesondere des Gleichstromnetzabschnitts, vom elektrischen Netzwerk abschalten respektive trennen sowie dadurch gegebenenfalls notwendige Lastverschiebungen innerhalb des elektrischen Netzwerks herbeiführen.

In allen Fällen sollte das Begrenzen des Stroms, insbesondere eines Fehlerstroms und/oder Kurzschlussstroms, über eine Fehlerstelle innerhalb des elektrischen Netzwerks, insbesondere im Gleichstromnetzabschnitt, mittels eines Vollbrückenstromrichters und/oder eines Strombegrenzers bis höchstens auf eine Grenzstromstärke, hierbei bevorzugt eine Nennstromstärke, welche auch im Regelbetrieb des elektrischen Netzwerks, insbesondere des Gleichstromnetzabschnitts anliegt, erfolgen. Insbesondere sollte diese Grenzstromstärke, bevorzugt Nennstromstärke, jedoch durch weitere Begrenzung durch wenigstens einen Vollbrückenumrichter gar unterschritten und auf das Schaltvermögen der Hochleistungsschalter begrenzt werden. Der fehlerbehaftete Abschnitt des elektrischen Netzwerks, beispielsweise wenigstens ein Zweig und/oder wenigstens ein Busabschnitt des Gleichstrombusses, würde sodann mittels wenigstens eines Hochspannungsschalters vom elektrischen Netzwerk abgeschaltet respektive getrennt.

Die Erfindung lässt verschiedene Ausführungsformen zu. Zur weiteren Verdeutlichung ihres Grundprinzips sind mehrere davon in den Zeichnungen dargestellt und werden nachfolgend beschrieben. Die Zeichnungen zeigen dabei in
- Fig. 1: eine erste Weiterbildung eines erfindungsgemäßen elektrischen Netzwerks;
- Fig. 2: eine zweite Weiterbildung eines erfindungsgemäßen elektrischen Netzwerks;
- Fig. 3: eine dritte Weiterbildung eines erfindungsgemäßen elektrischen Netzwerks;
- Fig. 4: eine Weiterbildung eines Stromrichters mit integriertem supraleitendem Strombegrenzer.

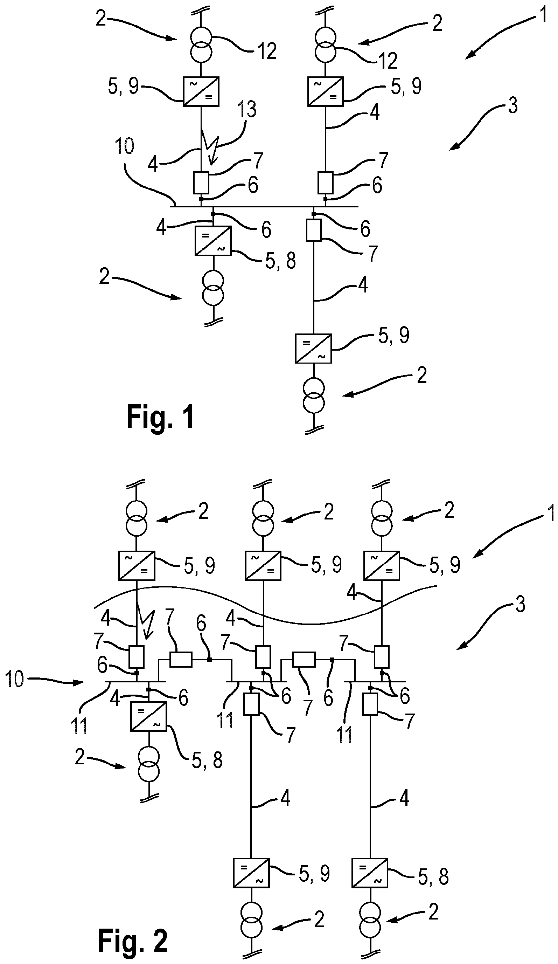

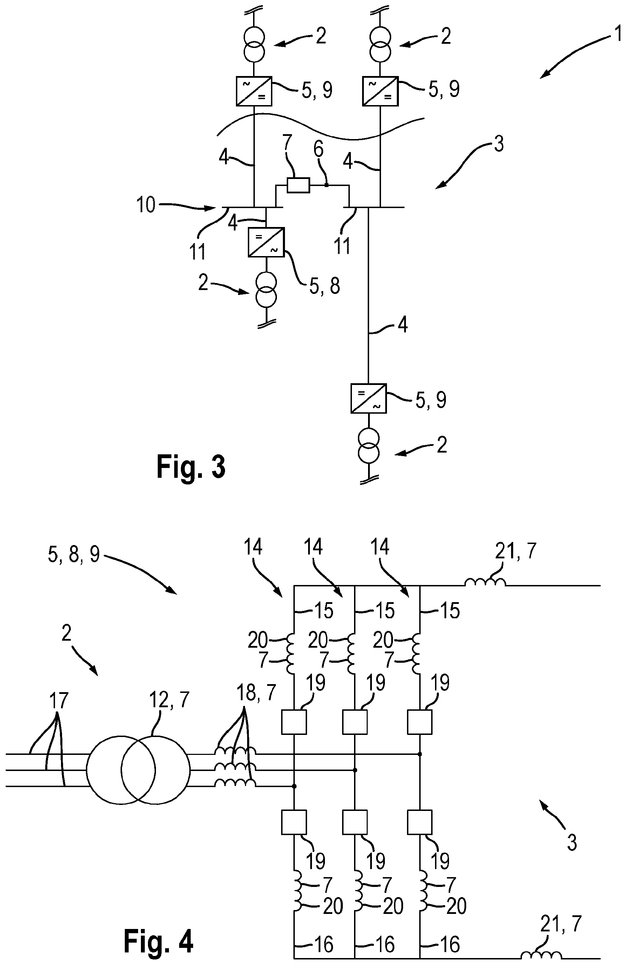

Die Figur 1 zeigt eine erste Weiterbildung eines erfindungsgemäßen elektrischen Netzwerks 1, wobei das elektrische Netzwerk 1 hierbei zur Hochspannungsgleichstromübertragung von elektrischer Energie eingerichtet ist. Das elektrische Netzwerk 1 umfasst dabei mehrere, hier vier Wechselstromnetzabschnitte 2 und einen einzigen mit jedem Wechselstromnetzabschnitt 2 elektrisch verbundenen Gleichstromnetzabschnitt 3, wobei der Gleichstromnetzabschnitt 3 wiederum mehrere, hier vier elektrische Zweige 4 aufweist. Die Wechselstromnetzabschnitte 2 sind dabei lediglich teilweise dargestellt, wobei die Darstellung im Wesentlichen auf den in jedem der Wechselstromnetzabschnitte 2 ausgeführten Transformator 12 beschränkt ist. Die Beschränkung ist dabei durch eine wellenförmige Doppellinie angedeutet. Dies ist auch für die Figuren 2 und 3 zutreffend. Zur Übertragung und Verteilung von elektrischer Energie wird das elektrische Netzwerk 1 zudem über die beiden in der Darstellung der Figur 1 oberen Wechselstromnetzabschnitte 2 durch jeweils mehrere, nicht näher dargestellte Stromerzeugeranlagen gespeist, welche mit diesen beiden Wechselspannungsabschnitten 2 elektrisch verbunden sind. Die Stromerzeugeranlagen sind dabei als Offshore-Windkraftanlagen ausgeführt, wobei mit jedem der in der Darstellung oberen Wechselstromnetzabschnitte 2 mehrere zu wenigstens einem Offshore-Windpark gruppierte Offshore-Windkraftanlagen elektrisch verbunden sind.

Darüber hinaus weist das elektrische Netzwerk 1 zwischen jedem Wechselstromnetzabschnitt 2 und dem Gleichstromnetzabschnitt 3 eine Schnittstelle auf, welche jeweils durch einen der zur Hochspannungsgleichstromübertragung eingerichteten Stromrichter 5 ausgebildet ist. In dem Gleichstromnetzabschnitt 3 ist zudem der Gleichstrombus 10 ausgeführt, wobei ein jeder Zweig 4 mit einem Stromrichter 5 mit dem Gleichstrombus 10 elektrisch verbunden ist. In drei der vier mit dem Gleichstrombus 10 verbundenen Zweige 4 ist dabei der jeweilige Stromrichter 5 ein Halbbrückenstromrichter 9, wobei in den drei Zweigen 4 mit den Halbbrückenstromrichtern 9 zudem jeweils ein Strombegrenzer 7 und jeweils ein Hochspannungsschalter 6 ausgeführt ist. Im weiteren, vierten Zweig 4, welcher keinen Halbbrückenstromrichter 9 aufweist, ist der in diesem Zweig 4 ausgeführte Stromrichter 5 hingegen ein Vollbrückenstromrichter 8, sodass in diesem Zweig 4 auf eine Ausführung eines Strombegrenzers 7 verzichtet wurde und entsprechend kein Strombegrenzer 7 sowie wiederum jedoch ein Hochspannungsschalter 6 ausgeführt ist.

Der Vollbrückenstromrichter 8 sowie der in der Darstellung der Figur 1 untere Halbbrückenstromrichter 9 sind dabei onshore, d. h. an Land angeordnet. Die beiden in der Darstellung der Figur 1 oberen Halbbrückenstromrichter 9 sowie die in den jeweiligen Zweigen 4 mit diesen Halbbrückenstromrichtern 9 in Reihe geschalteten Strombegrenzer 7 und Hochspannungsschalter 6 sind hingegen offshore, d. h. im Küstenvorfeld eines Meers und somit wie die Transformatoren 12 auf einer nicht näher dargestellten Offshore-Plattform angeordnet.

Die jeweiligen in den Zweigen 4 ausgeführten Strombegrenzer 7 sind darüber hinaus jeweils separat und somit eigenständig ausgeführte Strombegrenzer 7, wobei alle Strombegrenzer 7 zudem als supraleitende Strombegrenzer 7 ausgestaltet sind.

Tritt nunmehr in dem elektrischen Netzwerk 1 eine Fehlerstelle 13 mit einem damit verbundenen Fehlerstrom auf, wie in der Weiterbildung der Figur 1 in einem Zweig 4 des Gleichstromnetzabschnitts 3 mit einem Halbbrückenstromrichter 9 dargelegt, so wird der auftretende Fehlerstrom über die Fehlerstelle 13 durch die Strombegrenzer 7 zunächst auf eine Stromstärke begrenzt, welche maximal der im Regelbetrieb des elektrischen Netzwerks 1 im Gleichstromnetzabschnitt 3 vorliegenden Nennstromstromstärke entspricht. So lässt sich wenigstens einer der in den nicht von der Fehlerstelle 13 betroffenen Zweigen 4 ausgeführten Halbbrückenstromrichter 9 zumindest mit der halben oder gar vollen Leistung weiterbetreiben. Ferner wird der Fehlerstrom über die Fehlerstelle 13 durch den Vollbrückenumrichter 8 maximal auf und/oder bevorzugt unter eine Grenzstromstärke, besonders bevorzugt auf im Wesentlichen null Ampere beschränkt, wobei die Grenzstromstärke durch das Schaltvermögens des im Zweig 4 in Reihe zum Strombegrenzer 7 geschalteten Hochspannungsschalters 6 bestimmt ist. Ist die Grenzstromstärke erreicht, wird der die Fehlerstelle 13 aufweisende Zweig 4 mittels des Hochspannungsschalters 6 abgeschaltet und somit vom elektrischen Netzwerk 1 getrennt.

Aufgrund der Begrenzung der Stromstärke des Fehlerstroms auf das Schaltvermögen des Hochspannungsschalters 6 ist im betroffenen Zweig 4 sowie auch in den weiteren Zweigen 4 lediglich ein Hochspannungsschalter 6 ausgeführt, welcher sich hinsichtlich seines Schaltvermögens zwar zum Schalten von Gleichstrom eignet, jedoch ein konventionell ausgeführter Hochspannungsschalter 6 und somit primär zum Schalten von Wechselstrom eingerichtet ist. Ein Ausführen eines auf das Schalten von Gleichströmen eingerichteten Hochspannungsschalters, dessen Schaltvermögen beispielsweise die Kurzschussleistung des Gleichstromnetzabschnitts umfasst und/oder welcher insbesondere eine geeignete Lichtbogenlöschung aufweist, ist somit nicht notwendig.

Der Figur 2 ist eine zweite Weiterbildung eines erfindungsgemäßen elektrischen Netzwerks 1 zu entnehmen, wobei dieses wiederum einen Gleichstromnetzabschnitt 3 und mehrere, hier fünf, Wechselstromnetzabschnitte 2 aufweist, wobei die Wechselstromnetzabschnitte 2 jeweils über einen Stromrichter 5 mit dem Gleichstromnetzabschnitt 3 elektrisch verbunden sind. In dem Gleichstromnetzabschnitt 3 sind hierbei fünf Zweige 4 ausgebildet, wobei in drei Zweigen 4 ein als Halbbrückenstromrichter 9 ausgebildeter Stromrichter 5 sowie jeweils ein in Reihe zum Halbbrückenstromrichter 9 geschalteter Strombegrenzer 7 und ein Hochspannungsschalter 6 ausgeführt sind. Zwei der Zweige 4 umfassen hingegen einen als Vollbrückenstromrichter 8 ausgeführten Stromrichter 5, wobei wiederum in beiden dieser Zweige 4 ein in Reihe zum jeweiligen Vollbrückenumrichter 8 geschalteter Hochspannungsschalter 6 ausgeführt ist. Ausschließlich einer der beiden einen Vollbrückenumrichter 8 aufweisenden Zweige 4 umfasst zudem einen in Reihe zum Vollbrückenumrichter 8 sowie dem Hochspannungsschalter 6 geschalteten Strombegrenzer 7.

Die Zweige 4 sind hierbei erneut mit dem im Gleichstromnetzabschnitt 3 ausgeführten Gleichstrombus 10 elektrisch verbunden, wobei im Speziellen jeweils zwei der einen Stromrichter 5 aufweisenden Zweige 4 mit je einem Busabschnitt 11 des Gleichstrombusses 10 elektrisch verbunden sind. Je zwei Busabschnitte 11 des Gleichstrombusses 10 selbst sind zudem über je einen in Reihe mit einem Hochspannungsschalter 6 geschalteten Strombegrenzer 7 elektrisch verbunden.

Aus der Figur 3 geht eine dritte Weiterbildung eines erfindungsgemäßen Netzwerks 1 hervor. Das elektrische Netzwerk 1 umfasst erneut einen Gleichstromnetzabschnitt 3 und mehrere, hier vier Wechselstromnetzabschnitte 2, wobei die Wechselstromnetzabschnitte 2 jeweils über einen Stromrichter 5 mit dem Gleichstromnetzabschnitt 3 elektrisch verbunden sind. Zudem sind in dem Gleichstromnetzabschnitt 3 vier Zweige 4 ausgebildet, wobei in drei Zweigen 4 jeweils ein als Halbbrückenstromrichter 9 und in ausschließlich einem der Zweige 4 ein als Vollbrückenstromrichter 8 ausgebildeter Stromrichter 5 ausgeführt ist. Im Gleichstromnetzabschnitt 3 des elektrischen Netzwerks 1 sind überdies ein einziger Hochspannungsschalter 6 und ein einziger in Reihe zum Hochspannungsschalter 6 angeordneter Strombegrenzer 7 ausgeführt. Diese sind dabei jedoch nicht in einem der Zweige 4 mit einem Stromrichter 5 ausgeführt. Hingegen sind lediglich die beiden Busabschnitte 11 des im Gleichstromnetzabschnitt 3 ausgeführten Gleichstrombusses 10 über den Strombegrenzer 7 sowie den Hochspannungsschalter 6 elektrisch verbunden.

Darüber hinaus beschreibt die Figur 4 eine Ausführungsform eines Stromrichters 5, welcher hierbei als selbstgeführter Stromrichter 5 und im Speziellen als ein Modular-Multi-Level-Converter ausgebildet ist. Der Stromrichter 5 weist hierbei drei Zweige 14 auf, welche jeweils mit einer der drei Phasen 17 des Wechselstromnetzabschnitts 2 verbunden sind. Jede Phase 17 weist dabei eine zwischen dem Transformator 12 und den Zweigen 14 in Reihe geschaltete Wechselstromdrossel 18 auf. Ferner ist jeder Zweig 14 in einen oberen Arm 15 und einen unteren Arm 16 geteilt, wobei in jedem Arm 15, 16 ein Halbleiterventil 19 und eine Gleichstromdrossel 20 ausgeführt ist. Jedes Halbeiterventil 19 ist zudem durch mehrere in Reihe geschaltete Halbleiterzellen ausgebildet. Je nach Ausgestaltung der Halbleiterzellen mit einer Halbbrückenschaltung oder einer Vollbrückenschaltung wäre der Stromrichter 5 somit als Halbbrückenstromrichter 9 oder Vollbrückenstromrichter 8 ausgeführt.

Neben der den Figuren 1 bis 3 zu entnehmenden Ausführung als separate, eigenständige Strombegrenzer 7 ist in einer abweichenden Ausgestaltung der dargelegten elektrischen Netzwerke 1 zudem vorgesehen, dass wenigstens ein im elektrischen Netzwerk 1 ausgeführtes Element, elektrisches Bauteil und/oder eine elektrische Baugruppe selbst als supraleitender Strombegrenzer 7 ausgebildet ist. In diesem Zusammenhang beschreibt die Ausführung des Stromrichters 5 der Figur 4, dass das als supraleitender Strombegrenzer 7 ausgeführte Element, elektrische Bauteil und/oder die als supraleitender Strombegrenzer 7 ausgeführte elektrische Baugruppe unter anderem Bestandteil des Stromrichters 5 selbst ist. So ist in der Ausführung des Stromrichters 5 der Figur 4 vorgesehen, dass wenigstens eine der Wechselstromdrosseln 18, wenigstens eine der Gleichstromdrosseln 20, wenigstens eine der weiteren, im Gleichstromnetzabschnitt 3 ausgeführten Gleichstromdrosseln 21 und/oder der Transformator 12 als supraleitender Strombegrenzer 7 ausgeführt ist.

**BEZUGSZEICHENLISTE**

| | | | |
|---|---|---|---|
| 1 | elektrisches Netzwerk | 16 | unterer Arm |
| 2 | Wechselstromnetzabschnitt | 17 | Phase |
| 3 | Gleichstromnetzabschnitt | 18 | Wechselstromdrossel |
| 4 | Zweig | 19 | Halbleiterventil |
| 5 | Stromrichter | 20 | Gleichstromdrossel |
| 6 | Hochspannungsschalter | 21 | Gleichstromdrossel |
| 7 | Strombegrenzer | | |
| 8 | Vollbrückenstromrichter | | |
| 9 | Halbbrückenstromrichter | | |
| 10 | Gleichstrombus | | |
| 11 | Busabschnitt | | |
| 12 | Transformator | | |
| 13 | Fehlerstelle | | |
| 14 | Zweig | | |
| 15 | oberer Arm | | |

## Patentansprüche

1. Elektrisches Netzwerk (1), eingerichtet zur Hochspannungsgleichstromübertragung von elektrischer Energie, wobei das elektrische Netzwerk (1) wenigstens einen Wechselstromnetzabschnitt (2) und einen mit jedem Wechselstromnetzabschnitt (2) elektrisch verbundenen Gleichstromnetzabschnitt (3) umfasst, wobei der Gleichstromnetzabschnitt (3) wenigstens zwei elektrische Zweige (4) aufweist, darüber hinaus eine Schnittstelle zwischen jedem Wechselstromnetzabschnitt (2) und dem Gleichstromnetzabschnitt (3) wenigstens einen zur Hochspannungsgleichstromübertragung eingerichteten Stromrichter (5) umfasst und in dem Gleichstromnetzabschnitt (3) wenigstens ein Hochspannungsschalter (6) und wenigstens ein Strombegrenzer (7) ausgeführt ist, **dadurch gekennzeichnet, dass** wenigstens einer der Stromrichter (5) ein Vollbrückenstromrichter (8) ist.

2. Elektrisches Netzwerk (1) nach Anspruch 1, **dadurch gekennzeichnet, dass** wenigstens einer der Stromrichter (5) ein Halbbrückenstromrichter (9) ist.

3. Elektrisches Netzwerk (1) nach Anspruch 1 oder 2, **dadurch gekennzeichnet, dass** in einem Zweig (4) mit einem Halbbrückenstromrichter (9) und/oder in einem Zweig (4) mit einem Vollbrückenstromrichter (8) zumindest ein Strombegrenzer (7) und wenigstens ein Hochspannungsschalter (6) ausgeführt ist.

4. Elektrisches Netzwerk (1) nach zumindest einem der vorhergehenden Ansprüche, **dadurch gekennzeichnet, dass** in einem Zweig (4) mit einem Vollbrückenstromrichter (8) kein Strombegrenzer (7) ausgeführt ist.

5. Elektrisches Netzwerk (1) nach zumindest einem der vorhergehenden Ansprüche, **dadurch gekennzeichnet, dass** in dem Gleichstromnetzabschnitt (3) wenigstens ein Gleichstrombus (10) ausgeführt ist, wobei wenigstens ein einen Stromrichter (5) aufweisender Zweig (4) mit dem Gleichstrombus (10) und/oder einem Busabschnitt (11) des Gleichstrombusses (10) elektrisch verbunden ist.

6. Elektrisches Netzwerk (1) nach zumindest einem der vorhergehenden Ansprüche, **dadurch gekennzeichnet, dass** wenigstens zwei Busabschnitte (11) des Gleichstrombusses (10) über wenigstens einen in Reihe mit wenigstens einem Hochspannungsschalter (6) geschalteten Strombegrenzer (7) elektrisch verbunden sind.

7. Elektrisches Netzwerk (1) nach zumindest einem der vorhergehenden Ansprüche, **dadurch gekennzeichnet, dass** ein im Gleichspannungsabschnitt (3) ausgeführter Hochspannungsschalter (6) ein zum Schalten von Wechselstrom eingerichteter Hochspannungsschalter (6) ist.

8. Elektrisches Netzwerk (1) nach zumindest einem der vorhergehenden Ansprüche, **dadurch gekennzeichnet, dass** wenigstens ein Halbbrückenstromrichter (9) sowie wenigstens ein Strombegrenzer (7) offshore ausgeführt sind und wenigstens ein Vollbrückenstromrichter (8) onshore ausgeführt ist.

9. Elektrisches Netzwerk (1) nach zumindest einem der vorhergehenden Ansprüche, **dadurch gekennzeichnet, dass** wenigstens ein Strombegrenzer (7) ein supraleitender Strombegrenzer (7) ist.

10. Elektrisches Netzwerk (1) nach zumindest einem der vorhergehenden Ansprüche, **dadurch gekennzeichnet, dass** wenigstens ein im elektrischen Netzwerk (1) ausgeführtes Element, elektrisches Bauteil und/oder eine elektrische Baugruppe selbst als supraleitender Strombegrenzer (7) ausgebildet ist.

11. Elektrisches Netzwerk (1) nach zumindest einem der vorhergehenden Ansprüche, **dadurch gekennzeichnet, dass** das als supraleitender Strombegrenzer (7) ausgeführte Element, elektrische Bauteil und/oder die als supraleitender Strombegrenzer (7) ausgeführte elektrische Baugruppe Bestandteil eines Stromrichters (5) ist.

12. Elektrisches Netzwerk (1) nach zumindest einem der vorhergehenden Ansprüche, **dadurch gekennzeichnet, dass** ein Vollbrückenstromrichter (8) eine Netzfehlererkennungseinrichtung und/oder eine Reglereinrichtung aufweist, mittels welcher ein Strom über eine Fehlerstelle (13) im elektrischen Netzwerk (1) unterhalb eines Schaltvermögens eines Hochspannungsschalters (6) regelbar ist.

13. Elektrisches Netzwerk (1) nach zumindest einem der vorhergehenden Ansprüche, **dadurch gekennzeichnet, dass** im elektrischen Netzwerk zumindest ein Netzschutzgerät ausgeführt ist, über dessen implementierte Netzfehlererkennungseinrichtung eine Fehlerstelle (13) im elektrischen Netzwerk (1) erkennbar ist und ein Zusammenwirken mindestens eines Vollbrückenstromrichters (8) und wenigstens eines Hochspannungsschalters (6) koordinierbar ist, um einen Strom über die Fehlerstelle (13) abzuschalten.

14. Elektrisches Netzwerk (1) nach zumindest einem der vorhergehenden Ansprüche, **dadurch gekennzeichnet, dass** im elektrischen Netzwerk (1) ein Kommunikationsnetz ausgeführt ist, über welches eine Kommunikation und/oder Koordination von Netzschutzgeräten untereinander, Stromrichtern (5) und/oder Strombegrenzern (7) untereinander und/oder wenigstens eines Netzschutzgeräts mit wenigstens einem Stromrichter (5) und/oder Strombegrenzer (7) durchführbar ist.
